# EUROPÄISCHE PATENTSCHRIFT

(11) **EP 1 233 320 B1**
(45) Veröffentlichungstag und Bekanntmachung des Hinweises auf die Patenterteilung: **16.08.2006**
(21) Anmeldenummer: 02003378.3
(22) Anmeldetag: 14.02.2002
(51) Int. Cl.: G05G 1/14, B60T 7/06, B60K 26/02

(54) **Pedal**
Pedal
Pédale

(30) Priorität: 14.02.2001 DE 10106709
(43) Veröffentlichungstag der Anmeldung: 21.08.2002
(73) Patentinhaber: SIEMENS AKTIENGESELLSCHAFT, 80333 München (DE)
(72) Erfinder: Kohlen, Peter, 61267 Neu-Anspach (DE); Wehner, Andreas, 61389 Schmitten (DE); Zenker, Reinhard, 61462 Königstein (DE)

(56) Entgegenhaltungen:
- EP-A- 0 748 713
- EP-A- 0 848 313
- WO-A-97/30863
- DE-A- 4 223 077
- DE-U- 20 009 625

## Beschreibung

Die Erfindung betrifft ein Pedal, insbesondere für ein Kraftfahrzeug, mit einem Pedalarm, welcher an seinem ersten Endbereich von einer Kraft, insbesondere einer Fußkraft, auslenkbar und an seinem zweiten Endbereich um eine in einem Gehäuse gelagerte Schwenkachse schwenkbar gelagert ist, und mit einem Anschlag, insbesondere einem Kick-Down-Anschlag.

Ein solcher Pedal ist z.B. aus der EP 0 748 713 bekannt.

Pedale der oben genannten Art werden heute vielfach als Pedale bei Kraftfahrzeugen zur Steuerung der Geschwindigkeit eingesetzt. Hierbei lenkt beim Betrieb des Kraftfahrzeugs der Fahrer des Kraftfahrzeugs den Pedalarm des Pedals mittels Fußkraft aus, um eine bestimmte Geschwindigkeit des Kraftfahrzeugs zu erreichen. Die Auslenkung des Pedalarms ist dabei üblicherweise an eine Steuereinheit gekoppelt, über die die Geschwindigkeit des Kraftfahrzeugs einstellbar ist. Allgemein gilt: je größer die Auslenkung des Pedalarms desto größer die Geschwindigkeit des Kraftfahrzeugs.

Zur Steuerung der Geschwindigkeit des Kraftfahrzeugs ist das Pedal üblicherweise mechanisch oder elektronisch an eine Drosselklappe oder eine Diesel-Einspritzpumpe gekoppelt, über die die dem Vergaser zuzuführende Frischgasmenge bzw. Dieselmenge einstellbar ist. Bei einer mechanischen Kopplung zwischen dem Pedal und der Drosselklappe bzw. der Diesel-Einspritzpumpe weist das mechanische System mit mehreren bewegten Elementen Reibung auf. Dadurch wird es dem Fahrer des Kraftfahrzeugs erleichtert, die Pedalstellung bei einer Relativbeschleunigung zwischen dem Kraftfahrzeug und dem Fuß annähernd konstant zu halten. Dies gilt insbesondere bei Ruck- und Stoßbewegungen, die auf Schlechtwegstrecken auftreten können. Durch die Reibung des mechanischen Systems wird die Muskulatur des Fahrers des Kraftfahrzeugs bei längeren Fahrten mit annähernd konstanter Pedalstellung entlastet.

Bei einer elektronischen Kupplung zwischen dem Pedal und der Drosselklappe bzw. der Diesel-Einspritzpumpe ist über einen in dem Pedal integrierten Sollwertgeber der Drosselklappe eine bestimmte Position vorgebbar bzw. der Diesel-Einspritzpumpe eine bestimmte Dieselmenge zuweisbar. Aufgrund der fehlenden mechanischen Anwendung entfällt jedoch die bisher bei den mechanischen Systemen vorhandene mechanische Hysterese.

Um nun auch bei einer elektronischen Kupplung zwischen dem Pedal und dem Drosselklappenstutzen ein Aufschwingen des Fahrerfußes, insbesondere bei Lastschlag sowie bei Fahrten auf Schlechtwegstrecken besonders zuverlässig zu verhindern, ist üblicherweise eine mechanische Hysterese in das Pedal integriert, um dem Fahrer des Kraftfahrzeugs das bei mechanischen Systemen übliche Fahrgefühl zu vermitteln.

Darüber hinaus weisen Kraftfahrzeuge mit Automatikgetriebe häufig einen Kick-Down-Anschlag auf. Der Kick-Down-Anschlag dient dazu, daß der Fahrer, bevor er das Pedal ganz durchtritt, einen erhöhten Widerstand spürt. Bewegt der Fahrer des Kraftfahrzeugs den Pedalarm über diesen erhöhten Widerstand oder Kick-Down-Anschlag hinaus, so schaltet das Automatikgetriebe in der Regel einen Gang zurück. Zur Auslösung des Kick-Down-Anschlags weist der Pedalarm üblicherweise eine sogenannte Nase auf, die zum Halteteil des Pedalarms hin orientiert ist. An dem Halteteil wiederum ist an geeigneter Stelle ein Abstützteil angeordnet. Das Abstützteil ist üblicherweise ein Federelement. Gelangt das Abstützteil gegen die Nase des Pedalarms, sofern dieser fast durchgetreten ist, so spürt der Fahrer des Kraftfahrzeugs einen erhöhten Widerstand. Die Widerstandskraft des Kick-Down-Anschlags wird dabei üblicherweise durch die Federkraft und die Formgebung der Nase eingestellt.

Bei derartigen Pedalen verändert sich jedoch beim Betrieb des jeweiligen Pedals die Widerstandskraft des Kick-Down-Anschlags in nachteiliger Weise. Weist beispielsweise der Pedalarm ein geringes seitliches Spiel auf, so wird die Nase von dem Federelement an verschiedenen Stellen berührt wodurch bei jeder Vollauslenkung des Pedalarms durch den Kick-Down-Anschlag ein andere Widerstandskraft erzeugt wird. Zudem unterliegt die Anordnung Federelement-Nase einem Verschleiß beim Betrieb des Pedals, wodurch sich zusätzlich eine Veränderung der Widerstandskraft des Kick-Down-Anschlags einstellen kann.

Es erweist sich weiterhin als nachteilig bei den bekannten Systemen Nase-Feder, daß die von der Nase heruntergedrückte Feder nach Loslassen des Pedalarms, der sodann in seine Ausgangslage zurückschwingt, mechanisch wieder in die Ausgangsposition gebracht werden muß. Dies kann beispielsweise durch die Rückstellkraft der Federn nahezu selbsttätig erfolgen. Problematisch erweist sich hierbei jedoch ein Verschleiß der Feder, der dazu führt, daß die Feder nach einiger Zeit weniger elastisch ist und nicht mehr zwingend die Ausgangsposition nach jedem Hinunterdrücken wieder einnimmt, die die Feder bei der Inbetriebnahme des Pedals aufgewiesen hat.

Der Erfindung liegt daher die Aufgabe zugrunde, ein Pedal der o.g. Art anzugeben, einen besonders geringen Herstellungs- und Montageaufwand aufweist und bei dem zuverlässig gewährleistet ist, daß der Anschlag, insbesondere Kick-down-Anschlag, eine annähernd gleichbleibende Widerstandskraft auch nach längerer Betriebsdauer aufweist.

Diese Aufgabe wird erfindungsgemäß dadurch gelöst, daß der Anschlag durch eine beidseitig eingespannte Feder gebildet ist.

Die Erfindung geht dabei von der Überlegung aus, daß ein Pedal, mit dem ein besonders geringer Herstellungs- und Montageaufwand verbunden ist und bei dem der Anschlag eine Widerstandskraft aufweist, die auch nach längerer Betriebsdauer annähernd unverändert ist, eine besonders geringe Anzahl an Bauteilen umfassen sollte. Hierbei sollten auch die einzelnen Bauteile für sich besonders unanfällig gegen Verschleiß sein, um eine gleichbleibende Widerstandskraft des Anschlags auch bei einer besonders langen Betriebsdauer des Pedals zu gewährleisten. Ein Anschlag für ein Pedal mit einer besonders geringen Anzahl an Bauteilen ist einer, der eine Feder und eine gegen die Feder drückbare Nase aufweist. Eine Feder, die an nur einem Ende eingespannt ist, wird jedoch im Laufe der Zeit nicht immer wieder in ihre ursprüngliche Ausgangsposition zurückfedern, da das Material der Feder Verschleißerscheinungen aufweist. Steht jedoch die Feder selbst unter Spannung, so ist zuverlässig ein Zurückfedern der Feder in ihre ursprüngliche Ausgangsposition auch bei einer besonders langen Betriebsdauer des Pedals gewährleistet. Um hierbei zusätzliche Bauteile zu vermeiden, sollte die Feder nahezu selbsttätig in ihre Ursprungsposition zurückfedern. Hierzu ist der Anschlag eine beidseitig eingespannte Feder.

Vorteilhafterweise ist die Feder ein Blattfeder, die außermittig betätigbar ist. Bei einer außermittig betätigbaren Blattfeder ist besonders zuverlässig gewährleistet, daß diese selbsttätig in ihre Ausgangsposition zurückfedert. Hierbei sind also Eigenschaften des Federelements nutzbar, um ein Zurückfedern des Federelements in seine Ausgangsposition auch bei einer besonders langen Betriebsdauer des Pedals zu gewährleisten.

Vorteilhafterweise ist die Feder ein Federelement, wobei das Federelement ein Halteelement umfaßt, in dem eine Blattfeder und ein C-Feder eingespannt sind, wobei die Blattfeder mit der C-Feder verbunden ist. Eine zwischen zwei Blattfedern eingespannte C-Feder weist den Vorteil auf, daß das c-förmige Element, das zwischen den beiden Blattfedern eingespannt ist, die Blattfedern stabilisiert in der Weise, daß diese stärkere Kräfte aushalten können als dies ohne das annähernd c-förmige Element der Fall wäre. Setzt man die zwischen einer ersten und einer zweiten Blattfeder angeordnete C-Feder unter Spannung, so erhält man ein besonders steifes Element. Diese Anordnung federt besonders zuverlässig auch bei einer besonders langen Betriebsdauer des Pedals in seine Ausgangsposition zurück.

Vorteilhafterweise ist die Feder ein gewelltes Federblech. Auch ein gewelltes Federblech weist die Eigenschaft auf, daß es aufgrund seiner Federeigenschaften sofern es unter Spannung steht, stets wieder in die ursprüngliche Ausgangsposition auch bei einer besonders langen Betriebsdauer des Pedals zurückfedert.

Vorteilhafterweise weist das Gehäuse Befestigungsmittel auf, über die die Feder eingespannt ist. Das Gehäuse ist dabei dasjenige, in welchem der Pedalarm schwenkbar gelagert ist. Beispielsweise kann bei einer Herstlellung des Gehäuses im Spritzgußverfahren die Feder in die für das Gehäuse vorgesehene Spritzgußform eingelegt und mit Kunststoff so umspritzt werden, daß die Feder nach Abschluß des Spritzgußverfahrens beidseitig in das Gehäuse eingespannt ist. Alternativ kann die Feder jedoch auch mit Nieten oder Schrauben an dem Gehäuse so befestigt sein, daß die Feder beidseitig eingespannt ist.

Vorteilhafterweise weist der Pedalarm Befestigungsmittel auf, mittels derer die Feder eingespannt ist. Aus räumlichen Gründen kann es einfacher sein, die Feder an dem Pedal, insbesondere Pedalarm, und nicht an dem Gehäuse anzuordnen.

Alternativ kann jedoch auch der Anschlag an einem nicht mit dem Pedal verbundenen Element wie beispielsweise einer Bodenplatte des Kraftfahrzeugs angeordnet sein.

Vorteilhafterweise besteht die Feder überwiegend aus Metall. Federn aus Metall weisen üblicherweise einen besonders geringen Verschleiß auf und brechen nicht so häufig wie beispielsweise Federelemente aus Kunststoff.

Die mit der Erfindung erzielten Vorteile liegen insbesondere darin, daß durch den Einsatz einer beidseitig eingespannten Feder ein Kick-Down-Anschlag für einen Pedalarm eines Pedals realisierbar ist, der auch bei einer besondern langen Betriebsdauer des Pedals einen besonders geringen Verschleiß aufweist. Hierbei ist zuverlässig gewährleistet, daß die Feder des Anschlags nach einer Betätigung durch den Pedalarm stets wieder in ihre ursprüngliche Ausgangsposition zurückfedert.

Ein Ausführungsbeispiel der Erfindung wird anhand einer Zeichnung näher erläutert. Darin zeigen die Figuren:
Fig. 1 schematisch ein stehendes Pedal,
Fig. 2 schematisch einen Anschlag mit einer Blattfeder,
Fig.3 schematisch ein hängendes Pedal,
Fig. 4 schematisch einen Anschlag mit einem Federelement,
Fig. 5 schematisch einen Anschlag mit einem Federblech und
Fig. 6 einen Teilbereich einer Kennlinie eines Pedalarms.

Einander entsprechende Teile sind in allen Figuren mit den gleichen Bezugszeichen versehen.

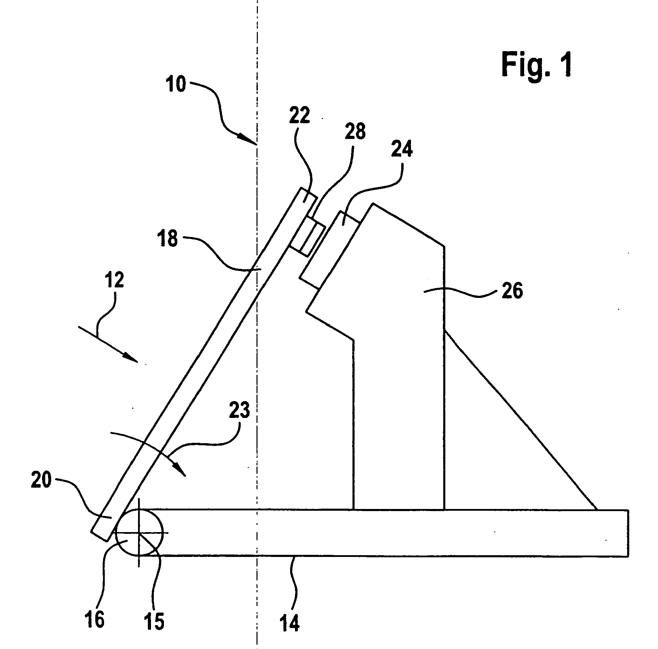

Das Pedal 10 gemäß Figur 1 ist als Pedal eines Kraftfahrzeugs ausgebildet und durch eine Kraft 12, insbesondere eine Fußkraft, des Fahrers zu betätigen, der das Kraftfahrzeug fährt. Mit der Betätigung des Pedals 10 steuert der Fahrer die Geschwindigkeit des Kraftfahrzeugs. Das Kraftfahrzeug weist dabei eine sogenanntes Automatikgetriebe auf was bedeutet, daß mittels einer Elektronik die Gänge des Getriebes eingestellt werden. Der Fahrer und das Kraftfahrzeug sind in der Zeichnung nicht näher dargestellt. Das Pedal 10 gemäß Figur 1 ist in nicht näher dargestellter Weise über eine Elektronik mit einem Leistungsstellglied für das Kraftfahrzeug verbunden, wobei die Elektronik und das Leistungsstellglied in der Zeichnung nicht näher dargestellt sind.

Das Pedal 10 ist als stehendes Pedal ausgeführt und umfaßt ein Gehäuse 14, an der schwenkbar um eine Schwenkachse 15 herum mittels eines Lagers 16 ein Pedalarm 18 gelagert ist. Der Pedalarm 18 weist einen ersten Endbereich 20 und einen zweiten Endbereich 22 auf. Der erste Endbereich 20 des Pedals 10 befindet sich im Bereich des Lagers 16. Der zweite Endbereich 22 des Pedals 10 ist von der Kraft 12 des nicht näher dargestellten Fahrers des ebenfalls nicht näher dargestellten Kraftfahrzeugs entlang der durch den Pfeil 23 gekennzeichneten Richtung verschwenkbar. Ein in der Zeichnung nicht näher dargestellter Rückstellmechanismus, beispielsweise in Form einer Rückstellfeder, bewegt den Pedalarm 18 nach einer Verschwenkung durch die Kraft 12 des Fahrers in ihre Ausgangsposition zurück. Dabei unterliegt der Pedalarm 18 bei einer Verschwenkung einer wegabhängigen Hysterese.

Bei fast vollständig ausgelenktem Pedalarm 18 entlang der Richtung des Pfeils 23 gelangt der zweite Endbereich 22 des Pedalarms 18 gegen einen als Kick-Down-Anschlag ausgebildeten Anschlag 24. Eine Betätigung des als Kick-Down-Anschlag ausgebildeten Anschlags 24 durch den Fahrer des Kraftfahrzeugs verursacht mittels der Elektronik des Kraftfahrzeugs ein Herunterschalten des Getriebes, üblicherweise um einen Gang. Hierzu ist die Berührung des als Kick-Down-Anschlag ausgebildeten Anschlags 24 mit dem Pedalarm 18 über einen in der Zeichnung nicht näher dargestellten Sensor erfaßbar, der in nicht näher dargestellter Weise mit der entsprechenden Elektronik des Kraftfahrzeugs verbunden ist.

Der als Kick-Down-Anschlag ausgebildete Anschlag 24 ist an einem Halteelement 26 angeordnet, das auf dem Gehäuse 14 befestigt ist. Alternativ können das Gehäuse 14 und das Halteelement 26 auch nicht miteinander verbunden sein. Zur Betätigung des als Kick-Down-Anschlag ausgebildeten Anschlags 24 weist der Pedalarm einen Nocken 28 auf. Alternativ kann der Nocken 28 auch an dem Halteelement 26 und der als Kick-Down-Anschlag ausgebildete Anschlag 24 an dem Pedalarm 18 angeordnet sein.

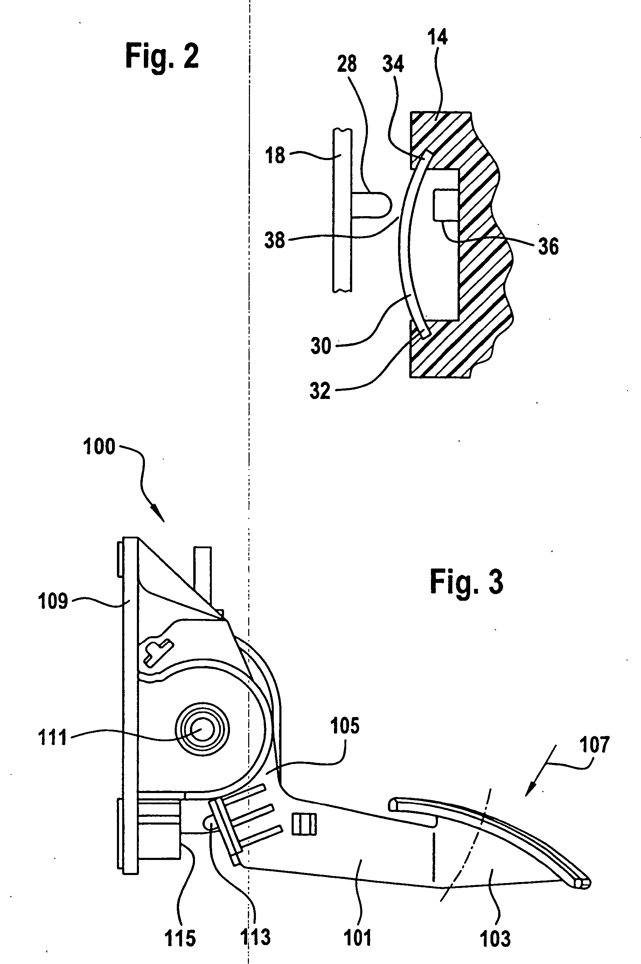

Der als Kick-Down-Anschlag ausgebildete Anschlag 24 ist im Detail in Figur 2 dargestellt. Der als Kick-Down-Anschlag ausgebildete Anschlag 24 umfaßt eine Feder, die als Blattfeder 30 ausgebildet ist. Das erste Ende 32 und das zweite Ende 34 der Blattfeder 30 sind fest an dem Halteelement 26 angeordnet. Die Anordnung des ersten Endes 32 und des zweiten Endes 34 der Blattfeder 30 erfolgte durch Einlegen der Enden 32 und 34 in eine für das Halteelement 26 vorgesehene Spritzgußform und umspritzen mit Kunststoff, was gleichzeitig oder nach der Herstellung des Halteelements 26 erfolgte. Die Blattfeder 30 ist dabei mit ihren Enden 32 und 34 so in das Halteelement 26 integriert worden, daß die Blattfeder 30 unter einer gewissen Spannung steht.

Gelangt der Nocken 28 des Pedalarms 18 in Berührung mit der Blattfeder 30, so drückt - bei einer weiteren Verschwenkung des Pedalarms 18 in die durch den Pfeil 23 gekennzeichnete Richtung gemäß Figur 1 - der Nocken 28 die Blattfeder 30 zum Halteelement 26 hin. Um die Blattfeder 30 mittels des Nockens 28 nicht vollständig durchzudrücken, weist das Halteelement 26 einen Absatz 36 auf. Wenn der Fahrer nicht mehr mit seinem Fuß gegen den Pedalarm 18 drückt, verschwenkt der in der Zeichnung nicht näher dargestellte Rückstellmechanismus den Pedalarm 18 in seine Ausgangsstellung zurück. Dabei löst sich der Nocken 28 von der Blattfeder 30. Die Blattfeder 30 schnellt dann durch ihre eigene Spannung, die sie aufgrund ihrer Einspannung in das Halteelement 30 aufweist, in ihre Ausgangsstellung zurück.

Beim Betrieb des Pedals 10 wird der Pedalarm 18 mittels der Kraft 12 in Richtung des Pfeiles 23 ausgelenkt. Im Bereich fast vollständiger Auslenkung des Pedalarms 18 gelangt der Nocken 28 des Pedalarms 18 gegen die beidseitig in das Halteelement 26 eingespannte Blattfeder 30. Der Nocken 28 des Pedalarms 18 drückt die Blattfeder 30 soweit herab, wie es der Absatz 36 zuläßt. Löst sich die Kraft 12 von dem Pedalarm 18, so schwenkt der Pedalarm 18 in seine Ausgangsposition zurück. Auch die Blattfeder 30 schnellt aufgrund ihrer Federkraft selbsttätig in ihre Ausgangsposition zurück. Durch die Blattfeder ist also in besonders einfacher Weise ein mechanisch spürbarer Kick-Down-Anschlag für den Fahrer eines Kraftfahrzeugs gewährleistet, der auch bei besonders langer Betriebsdauer besonders geringe Verschleißerscheinungen aufweist. Dem Fahrer wird also trotz der elektronischen Ankopplung des Pedals 10 an eine in der Zeichnung nicht näher dargestellte Drosselklappe des Kraftfahrzeugs ein mechanischer Widerstand beim fast vollständigen Hinunterdrücken des Pedalarms 18 vermittelt.

Das Pedal 100 gemäß Figur 3 ist in hängender Bauweise ausgeführt und dient ebenso wie das Pedal 10 zur Steuerung der Geschwindigkeit eines Kraftfahrzeugs. Das Pedal 100 umfaßt einen Pedalarm 101, der einen ersten Endbereich 103 und einen zweiten Endbereich 105 aufweist. Der erste Endbereich 103 des Pedalarms 101 weist eine Pedalplatte 107 auf, die von einer Kraft 107, insbesondere einer Fußkraft, des nicht näher dargestellten Fahrers des ebenfalls nicht näher dargestellten Kraftfahrzeugs betätigbar ist. Der zweite Endbereich 105 des Pedalarms 101 ist um eine in einem Gehäuse 109 gelagerte Schwenkachse 111 schwenkbar gelagert.

Das Pedal 100 ist elektronisch mit einem Leistungsstellglied des Kraftfahrzeugs verbunden, was in der Zeichnung nicht näher dargestellt ist. Um nun trotz der elektronischen Anbindung des Pedals 100 an das Leistungsstellglied dem Fahrer des Kraftfahrzeugs eine spürbare mechanische Kraftschwelle zur Verfügung zu stellen, weist der Pedalarm 101 einen Nocken 113 auf, der als Gegenpart für einen als Kick-Down-Anschlag ausgebildeten Anschlag 115 ausgelegt ist. Der als Kick-Down-Anschlag ausgebildete Anschlag 115 ist dabei jedoch in keiner Weise mit der Elektronik verbunden, die das Pedal 100 mit dem Leistungsstellglied des Kraftfahrzeugs verbindet. Die Funktion des als Kick-Down-Anschlags ausgebildeten Anschlags 115 ist also dafür ausgelegt, den Fahrer des Kraftfahrzeugs bei fast vollständigem Niederdrücken des Pedalarms 101 einen Anschlag 115 spüren zu lassen. Der als Kick-Down-Anschlag ausgebildete Anschlag 115 ist dabei einstückig mit dem Gehäuse 109 ausgeführt, kann aber auch zweistückig mit dem Gehäuse 109 ausgeführt sein.

Außerdem kann der als Kick-Down-Anschlag ausgebildete Anschlag 115 auch außerhalb des Pedals 100 angeordnet sein.

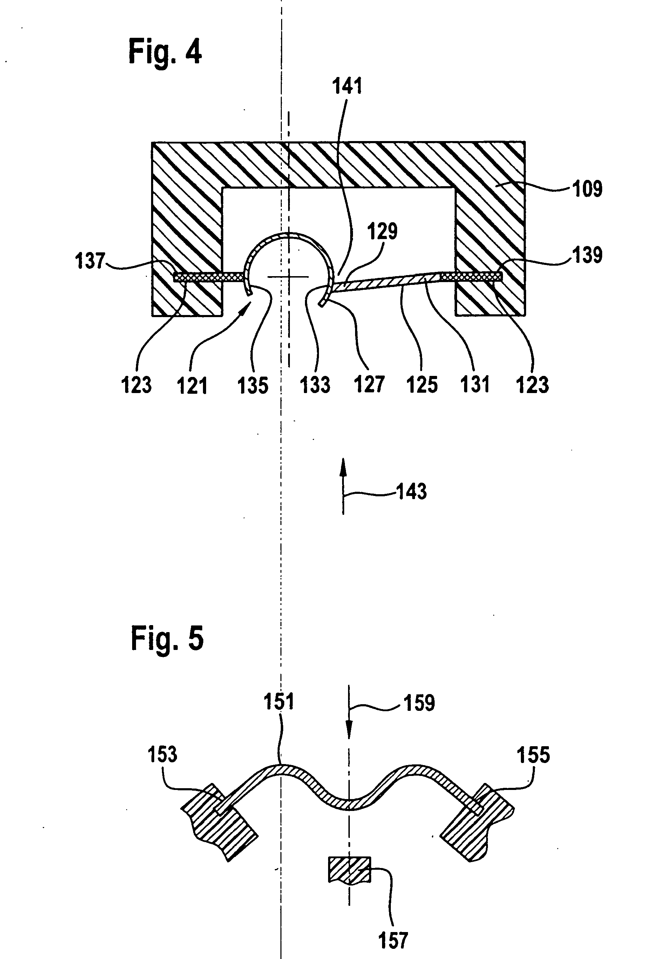

Eine schematische Seitenansicht des als Kick-Down-Anschlag ausgebildeten Anschlag 115 zeigt Figur 4 im Detail. Der als Kick-Down-Anschlag ausgebildete Anschlag 115 weist ein Federelement 121 auf, das durch ein Halteelement 123 gebildet ist, in dem eine mit einer Blattfeder 125 verbundene C-Feder 127 angeordnet ist. Die Blattfeder 125 ist dabei mit ihrem ersten Ende 129 mit dem Halteelement 123 und mit ihrem zweiten Ende 131 mit der C-Feder 127 verbunden. Die C-Feder 127 wiederum ist mit ihrem ersten Ende 133 mit der Blattfeder 125 und mit ihrem zweiten Ende 135 mit dem Halteelement 123 verbunden. Die Blattfeder 125 und die C-Feder 127 sind dabei so in dem Halteelement 123 angeordnet, daß beide unter Spannung stehen.

Das erste Ende 137 des Halteelements 123 und das zweite Ende 139 des Halteelements 123 sind in das aus Kunststoff im Spritzgußverfahren hergestellte Gehäuse 109 integriert. Die in dem Gehäuse 109 angeordneten Enden 137 und 139 des Halteelements 121 sind dabei in die für das Gehäuse 109 vorgesehene Spritzgußform eingelegt und mit Kunststoff umspritzt worden. Alternativ können das die Ende 137 und 139 des Halteelements 123 jedoch auch in das Gehäuse 109 mittels Nieten oder Schrauben eingebracht sein. Das Federelement 121 wird dabei so in dem Gehäuse 109 angeordnet, daß bei einer fast vollständigen Auslehkung des Pedalarms 101 des Pedals 100 der Nocken 113 des Pedalarms 101 im Bereich 141 der Verbindung der Blattfeder 125 mit der C-Feder 127 das Federelement 121 berührt, wobei sich der Nocken 113 entlang der durch den Pfeil 143 angedeuten Richtung bewegt.

Beim Betrieb des als Kick-Down-Anschlag ausgebildeten Anschlags 115 berührt der Nocken 113 des Pedalarms 101 das Federlement 121 im Bereich 141 der Verbindung der Blattfeder 125 mit der C-Feder 125. Die außermittige Betätigung des Federelements 121 durch den Nocken 113 gewährleistet dabei besonders zuverlässig, daß das Federelement 121 nach einer Betätigung durch den Nocken 113 des Pedalarms 101 in seine Ausgangsposition zurückschnellt.

Alternativ zu dem in Figur 4 im Detail dargestellten Federelement 121 kann der Kick-Down-Anschlag 113 auch ein gewelltes Federblech 151 umfassen. Dieses ist in Figur 5 schematisch dargestellt. Das gewellte Federblech 151 ist dabei mit seinen beiden Enden 153 und 155 in den Kunststoff des Gehäuses 109 integriert, wobei das Gehäuse 109 im Spritzgußverfahren hergestellt worden ist. Bei der Herstellung des Gehäuses 109 ist nicht nur das Federblech 151 sondern auch ein Anschlag in das Gehäuse 109 eingebracht worden. Das gewellte Federblech 109 ist entlang der durch den Pfeil 159 gekennzeichneten Richtung von dem Nocken 113 betätigbar. Nach einer Betätigung des gewellten Federblechs 151 durch den Nocken 113 des Pedalarms 101 schnellt das gewellte Federblech 151 selbsttätig in seine Ausgangsposition zurück.

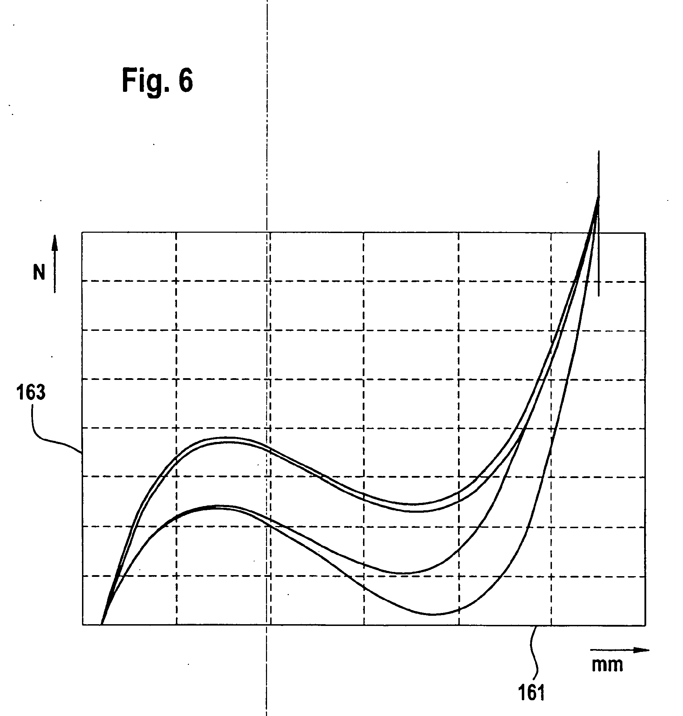

Eine typische Kennlinie eines Pedalarms 101 bei der Berührung des als Kick-Down-Anschlag ausgebildeten Anschlags 115 zeigt Figur 6. Dabei ist in dem Koordinatensystem gemäß Figur 6 auf der Abzisse 161 der Weg des Pedalarms 101 in der Einheit mm und auf der Ordinate 163 die zur Auslenkung des Pedalarms 101 erforderliche Kraft 107 in der Einheit N dargestellt. Deutlich erkennbar ist die Zunahme der zur Auslenkung des Pedalarms 101 erforderlichen Kraft 107 ab einem bestimmten von dem Pedalarm 101 zurückgelegten Weg. Nach dieser Kraftschwelle, die mechanisch durch den Kick-Down-Anschlag 66 realisiert ist und elektronisch an ein Leistungsstellglied des Kraftfahrzeugs übermittelt wird, nimmt die zur Auslenkung des Pedalarms 101 erforderliche Kraft 107 wiederum ab, um dann unmittelbar bei dem Anschlag des Nockens 113 gegen das Gehäuse 109 erneut anzusteigen.

Ein mechanischer als Kick-Down-Anschlag ausgebildeter Anschlag 24 oder 115 ist besonders einfach herstellbar, da die jeweilige Feder bereits vor der Montage des Pedals 10 oder 100 in das Halteelement 26 oder das Gehäuse 109 integrierbar ist. Durch die außermittige Betätigung der Blattfeder 30, die außermittige Betätigung des Federelements 121 und die mittige Betätigung des gewellten Federblechs 151 ist zuverlässig gewährleistet, daß die Federn stets nach einer Betätigung in ihre Ausgangsposition zurückschnellen. Hierdurch ist auch bei einer besonders langen Betriebsdauer des Pedals 10 oder 100 besonders zuverlässig gewährleistet, daß die Federn 30, 121 und 151 stets in ihre bei der Inbetriebnahme des Pedals 10 oder 100 festgelegte Ausgangsposition zurückschnellen.

## Patentansprüche

1. Pedal (10,100), insbesondere für ein Kraftfahrzeug, mit einem Pedalarm (18, 101), welcher an seinem ersten Endbereich (20, 103) von einer Kraft (12, 107), insbesondere einer Fußkraft, auslenkbar und an seinem zweiten Endbereich (22, 105) um eine in einem Gehäuse (14, 109) gelagerte Schwenkachse (15, 111) schwenkbar gelagert ist, und mit einem Anschlag (24, 115), insbesondere einem Kick-down-Anschlag, für den Pedalarm (18, 101), **dadurch gekennzeichnet, daß** der Anschlag (24, 115) eine beidseitig eingespannte Feder (30, 121, 151) ist.

2. Pedal (10,100) nach Anspruch 1, **dadurch gekennzeichnet, daß** die Feder (30, 121, 151) eine Blattfeder (30) ist, die außermittig betätigbar ist.

3. Pedal (10,50) nach Anspruch 1, **dadurch gekennzeichnet, daß** die Feder (30, 121, 151) ein Fedelrelement (121) ist, wobei das Federlement (121) ein Halteelement (123) umfaßt, in dem eine Blattfeder (125) und eine C-Feder (127) eingespannt sind, wobei die Blattfeder (125) mit der C-Feder (127) verbunden ist.

4. Pedal (10,100) nach Anspruch 1, **dadurch gekennzeichnet, daß** die Feder (30, 121, 151) ein gewelltes Federblech (151) ist.

5. Pedal (10,100) nach einem der Ansprüche 1 bis 4, **dadurch gekennzeichnet, daß** die Feder (30, 121, 151) überwiegend aus Metall besteht.

## Claims

1. Pedal (10, 100), particularly for a motor vehicle, having a pedal arm (18, 101), which at its first end area (20, 103) can be deflected by a force (12, 107), in particular the force of a foot, and at its second end area (22, 105) is supported so that it can pivot about a pivot axis (15, 111) supported in a housing (14, 109), and having a stop (24, 115), in particular a kick-down stop, for the pedal arm (18, 101), **characterized in that** the stop (24, 115) is a spring (30, 121, 151) fixed at both ends.

2. Pedal (10, 100) according to Claim 1, **characterized in that** the spring (30, 121, 151) is a leaf spring (30), which can be actuated eccentrically.

3. Pedal (10, 50) according to Claim 1, **characterized in that** the spring (30, 121, 151) is a spring element (121), the spring element (121) comprising a retaining element (123) in which a leaf spring (125) and a C-spring (127) are fixed, the leaf spring (125) being connected to the C-spring (127).

4. Pedal (10, 100) according to Claim 1, **characterized in that** the spring (30, 121, 151) is a corrugated spring plate (151).

5. Pedal (10, 100) according to any one of Claims 1 to 4, **characterized in that** the spring (30, 121, 151) is predominantly composed of metal.

## Revendications

1. Pédale (10, 100), destinée notamment à un véhicule automobile, et comportant un bras de pédale (18, 101), qui peut dévier, par sa première partie terminale (20, 103), sous l'effet d'une force (12, 107), notamment d'une poussée effectuée par un pied, et dont la deuxième partie terminale (22, 105) est montée pivotante autour d'un axe de pivotement (15, 111) installé dans un boîtier (14, 109), et une butée (24, 115), notamment une butée de rétrogradation de vitesse (ou butée de kick-down), pour le bras de pédale (18, 101), **caractérisée par le fait que** la butée (24, 115) est un ressort (30, 121, 151) fixé des deux côtés.

2. Pédale (10, 100) selon la revendication 1, **caractérisée par le fait que** le ressort (30, 121, 151) est un ressort à lame (30) pouvant être actionné d'une façon excentrée.

3. Pédale (10, 50) selon la revendication 1, **caractérisée par le fait que** le ressort (30, 121, 151) est un élément à ressort (121), où l'élément à ressort (121) comprend un élément de retenue (123) dans lequel sont fixés un ressort à lame (125) et un ressort en col de cygne (127), le ressort à lame (125) étant lié au ressort à col de cygne (127).

4. Pédale (10, 100) selon la revendication 1, **caractérisée par le fait que** le ressort (30, 121, 151) est une tôle à ressort (151) élastique et ondulée.

5. Pédale (10, 100) selon l'une des revendications 1 à 4, **caractérisée par le fait que** le ressort (30, 121, 151) est pour la plus grand part en métal.
